# EUROPEAN PATENT SPECIFICATION

(11) **EP 2 787 390 B1**
(45) Date of publication and mention of the grant of the patent: **19.09.2018**
(21) Application number: 12853696.8
(22) Date of filing: 03.07.2012
(51) Int. Cl.: G03B 21/20, G03B 33/08, H04N 9/31

(54) **PROJECTION DEVICE AND CONTROL METHOD THEREOF**
PROJEKTIONSVORRICHTUNG UND STEUERVERFAHREN DAFÜR
DISPOSITIF DE PROJECTION ET SON PROCÉDÉ DE COMMANDE

(30) Priority: 28.11.2011 CN 201110385139
(43) Date of publication of application: 08.10.2014
(60) Divisional application: 18187468.6
(73) Proprietor: Appotronics Corporation Limited, Shenzhen (CN)
(72) Inventor: HU, Fei, Shenzhen, Guangdong 518055 (CN); LI, Yi, Shenzhen, Guangdong 518055 (CN); YANG, Yi, Shenzhen, Guangdong 518055 (CN); CAO, Liangliang, Shenzhen, Guangdong 518055 (CN)
(74) Representative: Hoffmann Eitle
(86) International application number: PCT/CN2012/078091
(87) International publication number: WO 2013/078862

(56) References cited:
- WO-A1-2011/092841
- CN-A- 102 081 210
- CN-C- 100 552 529
- JP-A- H11 288 790
- JP-A- 2005 025 107
- JP-A- 2011 191 602
- US-A1- 2006 087 847
- US-A1- 2008 279 238
- US-A1- 2009 033 885
- US-A1- 2009 284 148

## Description

### BACKGROUND OF THE INVENTION

### Field of the Invention

The present invention relates to a field of projection. More particularly, the present invention relates to a projection apparatus and control method for it.

### Description of the Related Art

In conventional projection display systems, usually at least two solid state light source (SSLS for short) such as LDs (laser diode) or LEDs (light emitting diode) are used to generate at least two primary color light beams of different colors directly or indirectly. However, in these projection systems, the power of each SSLS is constant. So even in the situation that at least two beams of primary color light need to be output alternately, each SSLS is still in a working state. The output of at least two beams of primary color light alternately is achieved by light filtering using a light filter wheel, which leads to a high energy consumption of the projection apparatus.

In sum, a projection apparatus and control method for it are needed to solve the problem of high energy consumption caused by each of the SSLS of the projection apparatus keeping in working state in existing technology.

### SUMMARY OF THE INVENTION

An object of the present invention is to provide a projection apparatus and control method for it to reduce the energy consumption of the projection apparatus.

To solve the problem above, the present invention provides a projection apparatus according to claim 1.

The apparatus includes: at least two solid state light sources, a sync signal generator and a controller. The at least two solid state light sources are used for generating at least two light beams directly or indirectly, with the at least two light beams having different colors and being output alternately; the sync signal generator is used for generating a sync signal; and the controller is used for supplying a drive power in pulse manner based on the sync signal to control the work power of each of the at least two solid state light sources, wherein during at least one sub-period, one of the at least two solid state light sources is in a normal working status and another one of the at least two solid state light sources is in a standby status. The at least two solid state light sources comprise a first solid state light source for generating an excitation light, the projection apparatus further comprises a wavelength conversion device, a first color wheel and a first drive mechanism. The wavelength conversion device is used for converting the excitation light to a converted light; The first color wheel comprises a first segment and a second segment, the converted light is incident on the first color wheel; The first drive mechanism for driving the first color wheel to rotate, wherein the first segment and the second segment are alternatingly disposed in a path of the converted light, so that the converted light is filtered by the first segment to generate a first primary color light and is filtered by the second segment to generate a second primary color light.

In another aspect, the wavelength conversion device comprises a second color wheel carrying a wavelength conversion material and a second drive mechanism; The second drive mechanism is used to drive the second wheel to rotate, wherein the spot on the second wheel formed by the excitation light illuminates the wavelength conversion material along a predetermined path, and the wavelength conversion material converts the excitation light into the converted light.

According to the invention, the at least two solid state light sources comprises a second solid state light source for generating a third primary color light, the projection apparatus further comprises a light combining device combining the converted light and the third primary color light into the combined light to illuminate the first color wheel. The first color wheel further includes a third segment. By the driving of the first drive mechanism, the first, second and third segments are alternatingly disposed in a path of the combined light, and the third primary color light pass through the third segment.

In another aspect, the sync signal generator detects a moving position of the first color wheel to generate the sync signal.

In another aspect, the controller supplies a first power to the first solid state light source when the first segment is in the path of the converted light, supplies a second power to the first solid state light source when the second segment is in the path of the converted light, and supplies a low power to the first solid state light source when the third segment is in the path of the converted light, the low power being lower than the first and second power.

In another aspect, the first solid state light source is turned off or the low power to the first solid state light source is adjusted, in order to keep the first solid state light source in a standby state when the third segment is in the path of the converted light.

In another aspect, the controller supplies a third power to the second solid state light source when the third segment is in the path of the converted light, and supplies a low power to the second solid state light source when the first or second segments is in the path of the converted light, the low power being lower than the third power.

In another aspect, the second solid state light source is turned off or the low power to the second solid state light source is adjusted, in order to keep the second solid state light source in a standby state when the first or second segment is in the path of the converted light.

In another aspect, the first color wheel further comprises a fourth segment which transmits the converted light and the third primary color light, wherein the first, second, third and fourth segments are alternatingly in the path of the converted light and the third primary color light by driving of the first color wheel. When the fourth segment is in the path of the converted light and the third primary color light, the controller controls the first and second solid state light sources in a normal working status simultaneously.

To solve the problem above, the present invention also provides a method for controlling the projection apparatus according to claim 10.

The method comprises the steps of:
(a) directly or indirectly generating at least two primary color lights of different colors and output alternately using at least two solid state light sources;
(b) generating a sync signal using a sync signal generator; and
(c) using a controller to control the drive power in pulse manner of the at least two solid state light sources based on the sync signal, so that during at least some sub-period, at least one solid state light source is in a normal working status and at least one solid state light source is in a stand by status.

Step (a) includes: using a first solid state light source of the at least two solid state light sources to generate an excitation light; using a wavelength conversion device to convert the excitation light into a converted light; using a first drive mechanism to drive a first color wheel to rotate, the color wheel having a first and a second segment, the first and second segment alternatingly disposed in a path of the converted light, so that the converted light is filtered by the first segment to generate a first primary color light and is filtered by the second segment to generate a second primary color light.

Step (a) further includes: using a second solid state light source of the at least two solid state light source to generate a third primary color light; and using a light combining device to combine the converted light and the third primary color light into the combined light to illuminate the first color wheel. The first drive mechanism drives the first color wheel which further includes a third segment, so that the first, second and third segments are disposed in a path of the combined light alternatingly, and the third primary color light pass through the third segment.

In another aspect, wherein step (c) includes: using controller to supply a first power to the first solid state light source when the first segment is in the path of the converted light, to supply a second power to the first solid state light source when the second segment is in the path of the converted light, to supply a low power to the first solid state light source when the third segment is in the path of the converted light, the low power being lower than the first and second power. Furtherly, the controller is used to supply a third power to the second solid state light source when the third segment is in the path of the converted light, and to supply another low power to the second solid state light source when the first and second segments are in the path of the converted light, the other low power being lower than the third power.

The advantage of present invention is: different from prior art, the projection apparatus and control method of present invention can reduce energy consumption under the condition that the projection apparatus works normally by a control based on the sync signal, the control makes one of the at least two solid state light sources is in a normal working status and another one of the at least two solid state light sources is kept in an inactive status during at least one sub-period.

### BRIEF DESCRIPTION OF THE DRAWINGS

Fig. 1 schematically illustrates a first embodiment of present projection apparatus.
Fig. 2 schematically illustrates a first color wheel used in the projection apparatus shown in Fig. 1.
Fig. 3 shows an example of the brightness of the primary color light when applying the first color wheel shown in Fig. 2.
Figs. 4 shows work power for the first solid state light source when applying the first color wheel shown in Fig.2.
Figs. 5 shows work power for the second solid state light source when applying the first color wheel shown in Fig.2.
Fig. 6 shows another first color wheel of the projection apparatus shown in Fig.1.
Fig. 7 shows an example of the brightness of primary color light when applying the color wheel shown in Fig. 6.
Figs. 8 shows work power for the first solid state light source when applying the first color wheel shown in Fig.6.
Figs. 9 shows work power for the second solid state light source when applying the first color wheel shown in Fig.6.
Fig. 10 schematically illustrates an example of a projection apparatus not part of the invention.
Fig. 11 schematically illustrates a control method for projection apparatus of present invention.

### DETAILED DESCRIPTION OF THE PREFERRED EMBODIMENTS

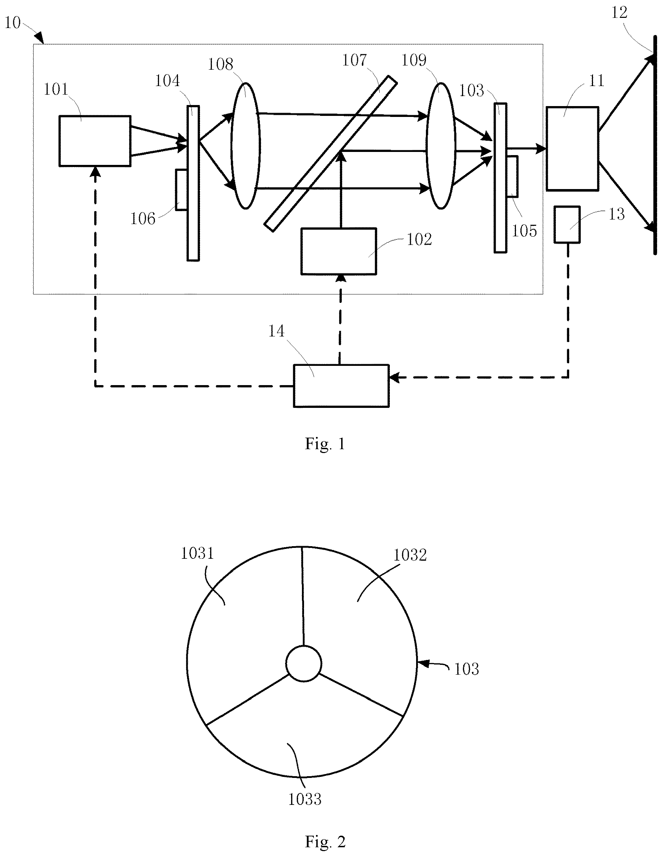

Referring to Fig.1, Fig.1 shows a schematical structure of projection apparatus in a first embodiment. As shown in Fig.1, the projection apparatus in present embodiment mainly comprises a light source system 10, a light modulating system 11, a screen 12, a sync signal generator 13 and a controller 14.

In this embodiment, the light source system 10 comprises a first SSLS 101, a second SSLS 102, a first color wheel 103, a second color wheel 104, a first drive mechanism 105, a second drive mechanism 106, light combining device 107 and light collecting device 108 and 109. The first SSLS 101 is used to generate an excitation light, and the excitation light is incident onto the second color wheel 104. A wavelength conversion material (not shown in figure) is set on the second color wheel 104 and converts the excitation light into a converted light. The second drive mechanism 106 drives the second color wheel 104 to make the light spot formed on the second color wheel 104 by the excitation light generated by the first SSLS 101 illuminate the wavelength conversion material along a predetermined path, which can avoid overheat caused by the light spot on the second color wheel 104 formed by the excitation light illuminating the same position of the wavelength conversion material for a long time. In other embodiment of present invention, the second color wheel 104 and the second drive mechanism 106 can be replaced by other wavelength conversion devices, such as a light emitting device which is mixed with some proper wavelength conversion material in its packaging material.

The converted light output from the second color wheel 104 is collected by a light collecting device 108, then illuminates on and pass through the light combining device 107, at last is collected by light collecting device 109 and illuminates on the first color wheel 103. In this embodiment, light collecting device 108 and 109 is lens or other proper optical element. As shown in Fig.2, the first color wheel 103 has a first segment 1031, a second segment 1032 and a third segment 1033. The converted light will become a first primary color light when is filtered by the first segment 1031, and become a second primary color light when is filtered by a second segment 1032.

A second SSLS 102 generates a third primary color light. The third primary color light generated by the second SSLS 102 is reflected by the light combining device 107 and then combined with the converted light generated by the second color wheel 104. In this embodiment, light combining device 107 is a light splitting filter or other proper optical element. The converted light and the third primary color light are combined by the light combining device 107 and then are incident onto the first color wheel 103.

A first drive mechanism 105 drives the first color wheel 103 to rotate, in order to make the first segment 1031; the second segment 1032 and the third segment 1033 are disposed in the path of the converted light and the third primary color light alternately. The first segment 1031 filters the incident converted light and the third primary color light, and let a first primary color light pass through; The second segment 1032 filters the incident converted light and the third primary color light, and let a second primary color light pass through; The third segment 1033 filters only let a third primary color light pass through when the converted light and the third primary color light are incident on it. Therefore, the first color wheel 103 outputs the first, second and third primary color light of different color alternately. A scattering material or scattering microstructure may be positioned on the third segment 1033, for scattering the third primary color light to achieve decoherence for it. The first, second and third primary color light are modulated by the light modulation system 11 and then are projected on the screen 12.

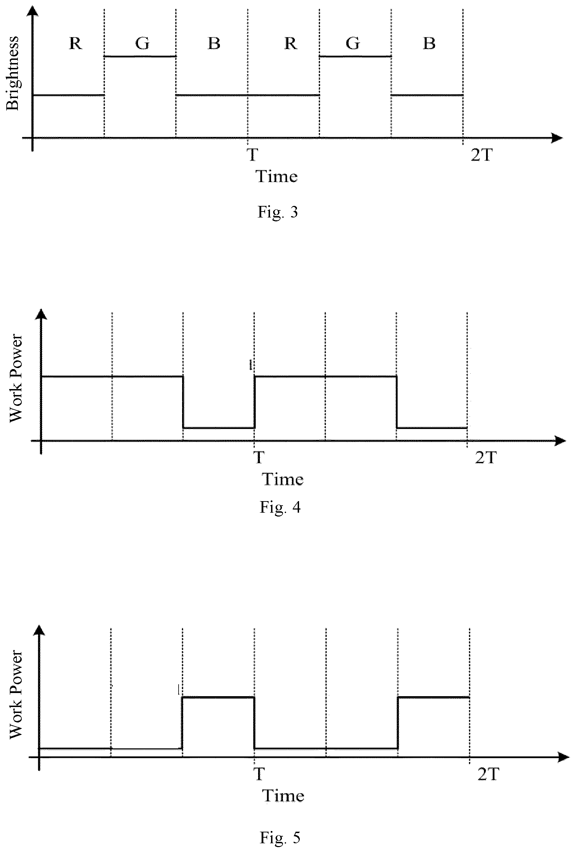

In present embodiment, the first SSLS 101 is laser diode or light emitting diode emitting blue light, UV light or near UV light. The second SSLS 102 is blue light laser diode or light emitting diode. The wavelength conversion material on the second color wheel 104 is yellow phosphor which converts the excitation light generated by the first SSLS 101 to yellow light. The first segment 1031, the second segment 1032 and the third segment 1033 on the first color wheel 103 are red light filtering segment, green light filtering segment and blue light transmitting segment, wherein the first segment 1031 filters the incident yellow light and blue light and outputs red light, the second segment 1032 filters the incident yellow light and blue light and outputs green light, the third segment 1033 transmits the blue light only when receives the incident yellow light and blue light. Therefore, the first color wheel 103 generates three primary color lights which are red light, green light and blue light (RGB) alternately. In a common display process, the brightness of red light R, green light G and blue light B is shown in Fig. 3. In other embodiment, the light source system 10 mentioned above can generates three primary color lights of other colors.

The sync signal generator 13 detects the moving position of the first color wheel 103 to generate a sync signal. More particularly, the sync signal generator 13 can detect a special label on the first color wheel 103, and generate a sync pulse at each time when detects the label. In other embodiment, the sync signal generator 13 can generate sync signal by other means, such as by detecting a brightness of a special primary color light.

As shown in Fig.4 and Fig.5, the controller 14 determines the time when the first, second and third segment 1031, 1032,1033 are disposed in the light path of the converted light and the third primary color light according to the sync signal. The controller 14 supplies a first power to the first SSLS 101 when the first segment is in the path of the converted light and the third primary color light, supplies a second power to the first SSLS 101 when the second segment is in the path of the converted light and the third primary color light, by this way, the first SSLS 101 is in a normal working status. The controller 14 further supplies a third power to the second SSLS 102 when the third segment is in the path of the converted light and the third primary color light, by this way, the second SSLS 102 is in a normal working status. Therefore, the first, second and third primary color light can be adjusted to a necessary brightness to satisfy the requirement of projecting display. As shown in Fig.4, the first power and the second power reveal the same, but in practical, the first, second and third power can be adjusted randomly based on the required brightness for each of the primary color light.

Furtherly, in present embodiment, the controller 14 supplies a low power to the second SSLS 102 when the first segment 1031 or the second segment 1032 is disposed in the path of the converted light and the third primary color light, the low power being lower than the third power. By this way, the second SSLS 102 is in an inactive status. And the controller 14 supplies another low power to the first SSLS 101 when the third segment 1033 is in the path of the converted light and the third primary color light, said another low power being lower than the first and the second power. By this way, the first SSLS 101 is in an inactive status.

According to the invention, the controller14 turns off or adjusts the power of the second SSL 102 when the first segment 1031 or the second segment 1032 is disposed in the path of the converted light and the third primary color light, to make the second SSLS 102 keep in a warm-up status; and the controller 14 turns off or adjusts the power of the first SSL 101 when the third segment 1033 is disposed in the path of the converted light and the third primary color light, to make the first SSLS 101 keep in a warm-up status. When the first and second SSLS 101, 102 are in the warm-up status, they can be kept in a predetermined temperature, which help them to come into a normal working status more quickly, which reduces the time of status shifting.

By the ways mentioned above, since the controller 14 control the work power in a pulse manner of the first SSLS 101 and the second SSLS 102 to make them to shift between normal working status and inactive status alternately, which reduces energy consumption of projection apparatus on the condition that the projection apparatus works well.

Moreover, since the first SSLS 101 and the second SSLS 102 work in pulse manner which can reduce heat generated by the first and second SSLSs, they can output light with much higher brightness when driven by a higher work power. In another words, when output the same brightness, the amount of the first SSLS 101 and the second SSLS 02 can be reduced to lower the cost of whole system.

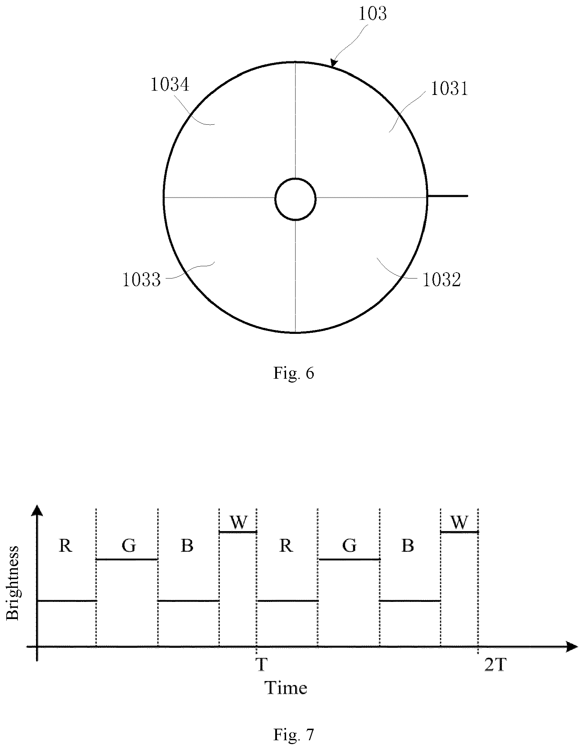

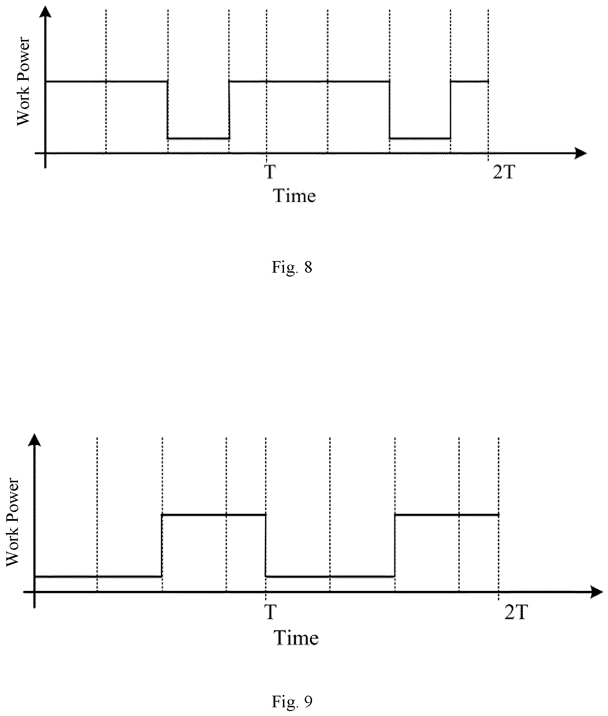

Fig. 6 shows a first color wheel 103 having a forth segment 1034 expect for a first segment 1031, a second segment 1032 and a third segment 1033. A first drive mechanism 105 drives the first color wheel 103 to rotate, in order to dispose the first segment 1031, the second segment 1032, the third segment 1033 and the forth segment 1034 alternately in the path of the combined light of the converted light and the third primary color light which are combined by light combining device 107. The converted light and the third primary color light pass through the forth segment 1034 and be output as white light. In a normal display process, the brightness of red light R, green light G, blue light B and white light W are shown as Fig.7. Meanwhile, as shown in Fig.8 and Fig.9, when the forth segment 1034 of the first color wheel 103 is disposed in the path of the converted light and the third primary color light, the controller 14 controls the first SSLS 101 and the second SSLS 102 to be in normal working status simultaneously, thus the first color wheel 103 will output white color to the light modulation system 11, which achieves a purpose of enhancing white light. Moreover, duty cycles of the first SSLS 101 and the second SSLS 102 are increased, and utilization ratio are increased too.

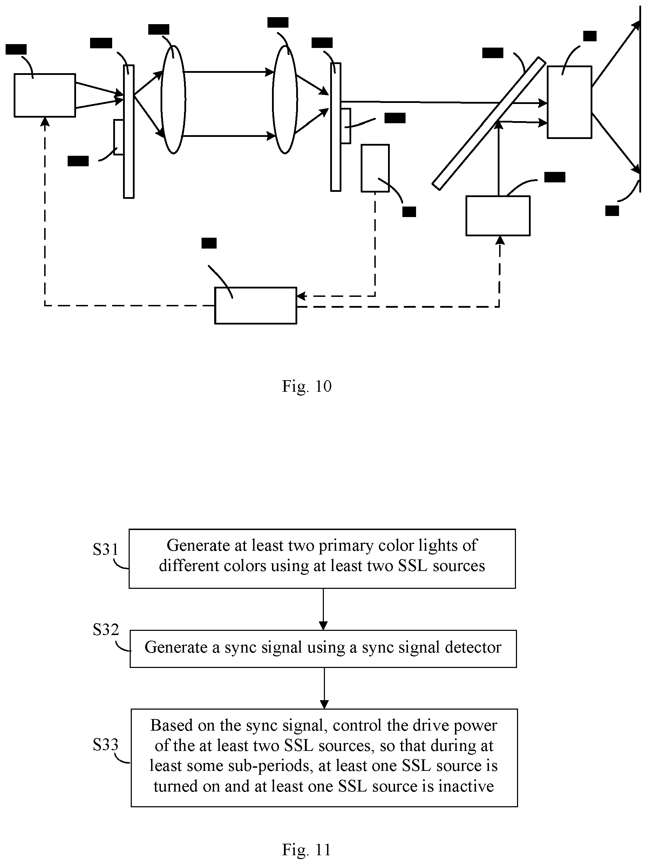

Refereeing to Fig 10, Fig. 10 illustrates a projection apparatus according to an example not part of the present invention. As shown in Fig.10, the projection apparatus of this example mainly comprises a light source system, a light modulating system, a screen, a sync signal generator and a controller.

In this embodiment, the light source system comprises a first SSLS, a second SSLS, a first color wheel, a second color wheel, a first drive mechanism, a second drive mechanism, light combining device and light collecting device. A difference between present projection apparatus in this embodiment and that of the embodiment shown in Fig.1 is that the second SSLS and light combining device are located downstream from the first color wheel. Therefore, through the light combining device, a third primary color light generated by the second SSLS is combined with a light path of a first primary color light and a second primary color light generated by the first color wheel.

In this example, the first color wheel also has a first segment, a second segment and a third segment, and they are driven by a first drive mechanism to disposed alternately in the light path of the converted light generated by the second color wheel. The converted light generated by the second color wheel becomes a first primary color light after filtered by the first segment, and becomes a second primary color light after filtered by the second segment.

The controller determines the time when the first, second and third segment are disposed in the light path of the converted light according to the sync signal generated by the sync signal generator. The controller supplies a first power to the first SSLS when the first segment is in the path of the converted light, supplies a second power to the first SSLS when the second segment is in the path of the converted light, and supplies a low power to the first SSLS when the third segment is in the path of the converted light, the low power being lower than the first and second power. Furtherly, the controller supplies a third power to the second SSLS when the third segment is in the path of the converted light, and supplies another low power to the second SSLS when the first and second segments are in the path of the converted light, said another low power being lower than the third power.

Since the third primary color light generated by the second SSLS is incident on the light modulation system directly, when the first or second segment is disposed in the path of the converted light, the work power of the second SSLS is adjusted to a degree that the third primary color light generated by the second SSLS won't bring any effect to the first and second primary color light, such as interference brought to the first and second primary color light by the third primary color light won't be perceived by human eyes. Preferably, the controller turns off or adjusts the power of the second SSLS when the first or second segment is disposed in the path of the converted light, in order to keep the second SSLS in a warm-up (standby) status; And when the third segment is disposed in the path of the converted light, the controller turns off or adjusts the power of the first SSLS, in order to keep the first SSLS in a warm-up (standby) status.

By this way mentioned above, the first SSLS and the second SSLS are in normal work status and inactive status alternately by controlling the work power to the first and second SSLS provided by the controller in pulse manner. Therefore, energy consumption of the projection apparatus can be reduced on the condition that the projection apparatus can work normally.

Moreover, since the first SSLS and the second SSLS work in pulse manner which can reduce heat generated by the first and second SSLSs, they can output light with much higher brightness when driven by a higher work power. In another words, when outputting the same brightness, the amount of the first SSLS and the second SSLS can be reduced to lower the cost of whole system.

Furtherly, except for the projection apparatus described in the first embodiment, the sync signal generator and the controller can also be used in other projection apparatuses which comprise at least two SSLS and uses them to directly or indirectly generate at least two primary color lights of different colors alternately. Meanwhile, the controller control the work power of the at least two SSLSs in a pulse manner based on the sync signal, in order to achieve that during at least some sub-periods, at least one of the at least two SSLSs is in normal working status and one of the at least two SSLSs is inactive status. By this way, energy consumption of the projection apparatus is reduced.

Referring to Fig.1 1, Fig.1 1 is a schematic figure of a control method for a projection apparatus in present invention. As shown in Fig.1 1, the control method in this embodiment comprises steps as followed:
In step S31, at least two SSLSs directly or indirectly output at least two beams of primary color light of different colors alternately. This step can be achieved according to the way described in the first embodiment mentioned above, or according to other ways disclosed in common knowledge of this field, thus won't be described in detail thereafter.

In step S32, the sync signal generator is applied to generate sync signal. In this step, the sync signal can be generated by detecting the moving position of the color wheel which is used to generate primary color light.

In step S33, the controller is used to control the work power of the at least two SSLSs in a pulse manner based on the sync signal, in order to achieve that during at least some sub-periods, at least one of the at least two SSLSs is in working status and one of the at least two SSLSs is inactive status. This step can be achieved by the way described in the first embodiment mentioned above, thus won't be described in detail thereafter.
the projection apparatus and control method in present invention can reduce energy consumption under the condition that the projection apparatus works normally by a control based on the sync signal, the control makes one of the at least two SSLSs is in working status and another one of the at least two SSLSs is kept in an inactive status during at least one sub-period.

It's understandable that the control of power may be achieved by many kinds of ways, like changing the current or voltage, or changing a ratio (duty cycle) of the pulse width to the whole pulse width of the drive signal. All of these are common knowledge which won't be described in details.

While the foregoing written description of the invention enables one of ordinary skill to make and use what is considered presently to be the best mode thereof, those of ordinary skill will understand and appreciate the existence of variations, combinations, and equivalents of the specific embodiment, method, and examples herein. The invention should therefore not be limited by the above described embodiment, method, and examples, but by the appended claims.

## Claims

1. A projection apparatus comprising:
at least two solid state light sources for generating at least two light beams directly or indirectly, with the at least two light beams having different colors and being output alternately, the at least two solid state light sources comprising a first solid state light source for generating an excitation light which is converted to a converted light; a second solid state light source for generating a third primary color light which is combined with the converted light into a combined light;
a wavelength conversion device for converting the excitation light to the converted light;
a first color wheel disposed to receive the incident converted light, the first color wheel comprising a first segment and a second segment;
a first drive mechanism for driving the first color wheel to rotate, wherein the first segment and the second segment are alternatingly disposed in a path of the converted light, so that the converted light is filtered by the first segment to generate a first primary color light and is filtered by the second segment to generate a second primary color light;
a light combining device combining the converted light and the third primary color light into the combined light to illuminate the first color wheel,
wherein the first color wheel further includes a third segment, the first, second and third segments are alternatingly disposed in a path of the combined light, and wherein the third primary color light pass through the third segment;
a sync signal generator for generating a sync signal; and
a controller for supplying a drive power in pulse manner to each of the at least two solid state light sources based on the sync signal,
wherein during at least one sub-period, one of the at least two solid state light sources is in working status and another one of the at least two solid state light sources is kept in a standby status.

2. The projection apparatus of claim1, wherein the wavelength conversion device comprises:
a second color wheel carrying a wavelength conversion material; and
a second drive mechanism to drive the second wheel to rotate, wherein a light spot on the second wheel formed by the excitation light illuminates the wavelength conversion material along a predetermined path, and the wavelength conversion material converts the excitation light into the converted light.

3. The projection apparatus of claim 1, wherein the sync signal generator detects a moving position of the first color wheel to generate the sync signal.

4. The projection apparatus of claim 1, wherein the controller supplies a first power to the first solid state light source when the first segment is in the path of the converted light, supplies a second power to the first solid state light source when the second segment is in the path of the converted light, and supplies a low power to the first solid state light source when the third segment is in the path of the converted light, the low power being lower than the first and second power.

5. The projection apparatus of claim 4, wherein the low power turns off the first solid state light source or adjusts the power of the first solid state light source to keep it in a standby state when the third segment is in the path of the converted light.

6. The projection apparatus of claim 1, wherein the controller supplies a third power to the second solid state light source when the third segment is in the path of the converted light, and supplies a low power to the second solid state light source when the first and second segments are in the path of the converted light, the low power being lower than the third power.

7. The projection apparatus of claim 6, wherein the controller turns off the second solid state light source or adjusts the power of the second solid state light source to keep it in a standby state when the first or second segment is in the path of the converted light.

8. The projection apparatus of claim 1, wherein the first color wheel further comprises a fourth segment which transmits the converted light and the third primary light, wherein the first, second, third and fourth segments are alternatingly in the path of the converted light and the third primary color light by driving of a first drive mechanism, and wherein when the fourth segment is in the path of the converted light and the third primary color light, the controller controls the first and second solid state light sources to be in working status simultaneously.

9. A method for controlling a projection apparatus, comprising the steps of:
(a) directly or indirectly generating at least two primary color lights of different colors and outputting said lights alternately using at least two solid state light sources; wherein step (a) includes:
using a first solid state light source of the at least two solid state light sources to generate an excitation light;
using a wavelength conversion device to convert the excitation light into a converted light;
using a first drive mechanism to drive a first color wheel to rotate, the first color wheel having a first and a second segment, so that the first and second segment are alternatingly disposed in a path of the converted light when the first color wheel rotates, then the converted light is filtered by the first segment to generate a first primary color light and is filtered by the second segment to generate a second primary color light;
wherein step (a) further includes:
using a second solid state light source of the at least two solid state light sources to generate a third primary color light which is combined with the converted light into a combined light, using a light combing device to combine the converted light and the third primary color light to illuminate the first color wheel,
using the first drive mechanism to drive the first color wheel which further has a third segment, so that the first, second and third segments are alternatingly disposed in a path of the converted light and the third primary color light, and the third primary color light pass through the third segment;
(b) generating a sync signal using a sync signal detector; and
(c) using a controller to control the drive power in pulse manner of the at least two solid state light sources based on the sync signal, so that during at least some sub-period, at least one solid state light source is in working status and at least another solid state light source is in a standby status.

10. The method of claim 9, wherein step (c) includes:
using the controller to supply a first power to the first solid state light source when the first segment is in the path of the converted light, to supply a second power to the first solid state light source when the second segment is in the path of the converted light, to supply a low power to the first solid state light source when the third segment is in the path of the converted light, the low power being lower than the first and second power, to supply a third power to the second solid state light source when the third segment is in the path of the converted light, and to supply another low power to the second solid state light source when the first and second segments are in the path of the converted light, said another low power being lower than the third power.

## Patentansprüche

1. Projektionsvorrichtung, umfassend:
mindestens zwei Festkörper-Lichtquellen zum direkten oder indirekten Erzeugen von mindestens zwei Lichtstrahlenbündeln, wobei die mindestens zwei Lichtstrahlenbündel unterschiedliche Farben haben und abwechselnd ausgegeben werden, wobei die mindestens zwei Festkörper-Lichtquellen eine erste Festkörper-Lichtquelle zum Erzeugen eines Anregungslichts, das in ein konvertiertes Licht konvertiert wird, und eine zweite Festkörper-Lichtquelle zum Erzeugen eines dritten Primärfarbenlichts, das mit dem konvertierten Licht zu einem kombinierten Licht kombiniert wird, umfassen;
eine Wellenlängenkonvertierungsvorrichtung zum Konvertieren des Anregungslichts in das konvertierte Licht;
ein erstes Farbrad, das angeordnet ist, um das einfallende konvertierte Licht zu empfangen, wobei das erste Farbrad ein erstes Segment und ein zweites Segment umfasst;
einen ersten Antriebsmechanismus, um das erste Farbrad zum Drehen anzutreiben, wobei das erste Segment und das zweite Segment abwechselnd in einem Pfad des konvertierten Lichts angeordnet werden, sodass das konvertierte Licht durch das erste Segment gefiltert wird, um ein erstes Primärfarbenlicht zu erzeugen, und durch das zweite Segment gefiltert wird, um ein zweites Primärfarbenlicht zu erzeugen;
eine Lichtkombinationsvorrichtung, die das konvertierte Licht und das dritte Primärfarbenlicht zu dem kombinierten Licht kombiniert, um das erste Farbrad zu beleuchten,
wobei das erste Farbrad weiter ein drittes Segment einschließt, wobei das erste, zweite und dritte Segment abwechselnd in einem Pfad des kombinierten Lichts angeordnet werden, und wobei das dritte Primärfarbenlicht das dritte Segment durchquert;
einen Synchronisationssignalerzeuger zum Erzeugen eines Synchronisationssignals; und
eine Steuereinheit, um jeder von den mindestens zwei Festkörper-Lichtquellen basierend auf dem Synchronisationssignal eine Antriebsenergie auf gepulste Weise zuzuführen,
wobei sich während mindestens einer Teilperiode eine von den mindestens zwei Festkörper-Lichtquellen im Arbeitsstatus befindet und eine andere von den mindestens zwei Festkörper-Lichtquellen in einem Bereitschaftsstatus gehalten wird.

2. Projektionsvorrichtung nach Anspruch 1, wobei die Wellenlängenkonvertierungsvorrichtung umfasst:
ein zweites Farbrad, das ein Wellenlängenkonvertierungsmaterial trägt; und
einen zweiten Antriebsmechanismus, um das zweite Rad zum Drehen anzutreiben, wobei ein Lichtfleck auf dem zweiten Rad, der durch das Anregungslicht gebildet wird, das Wellenlängenkonvertierungsmaterial entlang eines vorgegebenen Pfads beleuchtet und das Wellenlängenkonvertierungsmaterial das Anregungslicht in das konvertierte Licht konvertiert.

3. Projektionsvorrichtung nach Anspruch 1,
wobei der Synchronisationssignalerzeuger eine sich bewegende Position des ersten Farbrads erkennt, um das Synchronisationssignal zu erzeugen.

4. Projektionsvorrichtung nach Anspruch 1,
wobei die Steuereinheit der ersten Festkörper-Lichtquelle eine erste Energie zuführt, wenn sich das erste Segment in dem Pfad des konvertierten Lichts befindet, der ersten Festkörper-Lichtquelle eine zweite Energie zuführt, wenn sich das zweite Segment in dem Pfad des konvertierten Lichts befindet, und der ersten Festkörper-Lichtquelle eine niedrige Energie zuführt, wenn sich das dritte Segment in dem Pfad des konvertierten Lichts befindet, wobei die niedrige Energie niedriger ist als die erste und die zweite Energie.

5. Projektionsvorrichtung nach Anspruch 4,
wobei die niedrige Energie die erste Festkörper-Lichtquelle ausschaltet oder die Energie der ersten Festkörper-Lichtquelle anpasst, um sie in einem Bereitschaftsstatus zu halten, wenn sich das dritte Segment in dem Pfad des konvertierten Lichts befindet.

6. Projektionsvorrichtung nach Anspruch 1,
wobei die Steuereinheit der zweiten Festkörper-Lichtquelle eine dritte Energie zuführt, wenn sich das dritte Segment in dem Pfad des konvertierten Lichts befindet, und der zweiten Festkörper-Lichtquelle eine niedrige Energie zuführt, wenn sich das erste und das zweite Segment in dem Pfad des konvertierten Lichts befinden, wobei die niedrige Energie niedriger ist als die dritte Energie.

7. Projektionsvorrichtung nach Anspruch 6,
wobei die Steuereinheit die zweite Festkörper-Lichtquelle ausschaltet oder die Energie der zweiten Festkörper-Lichtquelle anpasst, um sie in einem Bereitschaftsstatus zu halten, wenn sich das erste oder das zweite Segment in dem Pfad des konvertierten Lichts befindet.

8. Projektionsvorrichtung nach Anspruch 1,
wobei das erste Farbrad weiter ein viertes Segment umfasst, das das konvertierte Licht und das dritte Primärlicht durchlässt, wobei sich das erste, das zweite und das vierte Segment abwechselnd in dem Pfad des konvertierten Lichts und des dritten Primärfarbenlicht befinden, indem ein erster Antriebsmechanismus angetrieben wird, und wobei die Steuereinheit, wenn sich das vierte Segment in dem Pfad des konvertierten Lichts und des dritten Primärfarbenlichts befindet, die erste und die zweite Festkörper-Lichtquelle steuert, um sich gleichzeitig im Arbeitsstatus zu befinden.

9. Verfahren zum Steuern einer Projektionsvorrichtung, umfassend die folgenden Schritte:
(a) direktes oder indirektes Erzeugen von mindestens zwei Primärfarbenlichtern von unterschiedlichen Farben und Ausgeben dieser Lichter
abwechselnd unter Verwendung von mindestens zwei Festkörper-Lichtquellen; wobei Schritt (a) einschließt:
Verwenden einer ersten Festkörper-Lichtquelle von den mindestens zwei Festkörper-Lichtquellen, um ein Anregungslicht zu erzeugen;
Verwenden einer Wellenlängenkonvertierungsvorrichtung zum Konvertieren des Anregungslichts in ein konvertiertes Licht;
Verwenden eines ersten Antriebsmechanismus, um ein erstes Farbrad zum Drehen anzutreiben, wobei das erste Farbrad ein erstes Segment und ein zweites Segment aufweist, sodass das erste und das zweite Segment abwechselnd in einem Pfad des konvertierten Lichts angeordnet werden, wenn sich das erste Farbrad dreht, dann das konvertierte Licht durch das erste Segment gefiltert wird, um ein erstes Primärfarbenlicht zu erzeugen, und durch das zweite Segment gefiltert wird, um ein zweites Primärfarbenlicht zu erzeugen;
wobei Schritt (a) weiter einschließt:
Verwenden einer zweiten Festkörper-Lichtquelle von den mindestens zwei Festkörper-Lichtquellen, um ein drittes Primärfarbenlicht zu erzeugen, das mit dem konvertierten Licht zu einem kombinierten Licht kombiniert wird, Verwenden einer Lichtkombinationsvorrichtung, um das konvertierte Licht und das dritte Primärfarbenlicht zu kombinieren, um das erste Farbrad zu beleuchten,
Verwenden des ersten Antriebsmechanismus, um das erste Farbrad anzutreiben, das weiter ein drittes Segment aufweist, sodass das erste, zweite und dritte Segment abwechselnd in einem Pfad des kombinierten Lichts und des dritten Primärfarbenlichts angeordnet werden und das dritte Primärfarbenlicht das dritte Segment durchquert;
(b) Erzeugen eines Synchronisationssignals unter Verwendung eines Synchronisationssignalerzeugers; und
(c) Verwenden einer Steuereinheit, um die Antriebsenergie der mindestens zwei Festkörper-Lichtquellen basierend auf dem Synchronisationssignal auf gepulste Weise zu steuern, sodass sich während mindestens irgendeiner Teilperiode mindestens eine Festkörper-Lichtquellen im Arbeitsstatus befindet und mindestens eine andere Festkörper-Lichtquelle in einem Bereitschaftsstatus befindet.

10. Verfahren nach Anspruch 9, wobei Schritt (c) einschließt:
Verwenden der Steuereinheit, um der ersten Festkörper-Lichtquelle eine erste Energie zuzuführen, wenn sich das erste Segment in dem Pfad des konvertierten Lichts befindet, der ersten Festkörper-Lichtquelle eine zweite Energie zuzuführen, wenn sich das zweite Segment in dem Pfad des konvertierten Lichts befindet, der ersten Festkörper-Lichtquelle eine niedrige Energie zuzuführen, wenn sich das dritte Segment in dem Pfad des konvertierten Lichts befindet, wobei die niedrige Energie niedriger ist als die erste und die zweite Energie, der zweiten Festkörper-Lichtquelle eine dritte Energie zuzuführen, wenn sich das dritte Segment in dem Pfad des konvertierten Lichts befindet, und der zweiten Festkörper-Lichtquelle eine andere niedrige Energie zuzuführen, wenn sich das erste und das zweite Segment in dem Pfad des konvertierten Lichts befinden, wobei diese andere niedrige Energie niedriger ist als die dritte Energie.

## Revendications

1. Appareil de projection comprenant :
au moins deux sources de lumière à semi-conducteurs pour générer au moins deux faisceaux de lumière directement ou indirectement, les au moins deux faisceaux de lumière ayant des couleurs différentes et étant délivrés en alternance, les au moins deux sources de lumière à semi-conducteurs comprenant une première source de lumière à semi-conducteurs pour générer une lumière d'excitation qui est convertie en une lumière convertie ; une seconde source de lumière à semi-conducteurs pour générer une troisième lumière de couleur primaire qui est combinée avec la lumière convertie en une lumière combinée ;
un dispositif de conversion de longueurs d'onde pour convertir la lumière d'excitation en lumière convertie ;
une première roue de couleur disposée pour recevoir la lumière convertie incidente, la première roue de couleur comprenant un premier segment et un deuxième segment ;
un premier mécanisme d'entraînement pour entraîner la première roue de couleur en rotation, dans lequel le premier segment et le deuxième segment sont disposés en alternance dans un trajet de la lumière convertie de sorte que la lumière convertie soit filtrée par le premier segment pour générer une première lumière de couleur primaire et soit filtrée par le deuxième segment pour générer une seconde lumière de couleur primaire ;
un dispositif de combinaison de lumière combinant la lumière convertie et la troisième lumière de couleur primaire en lumière combinée pour éclairer la première roue de couleur,
dans lequel la première roue de couleur comprend en outre un troisième segment, le premier, le deuxième et le troisième segment étant disposés en alternance dans un trajet de la lumière combinée et dans lequel la troisième lumière de couleur primaire passe à travers le troisième segment ;
un générateur de signal synchrone pour générer un signal synchrone ; et
un dispositif de commande pour fournir une énergie d'entraînement en mode pulsé à chacune des au moins deux sources de lumière à semi-conducteurs sur la base du signal synchrone,
dans lequel, au cours d'au moins une sous-période, l'une des au moins deux sources de lumière à semi-conducteurs est dans un état de travail et une autre des au moins deux sources de lumière à semi-conducteurs est maintenue en état de réserve.

2. Appareil de projection selon la revendication 1, dans lequel le dispositif de conversion de longueurs d'onde comprend :
une seconde roue de couleur portant un matériau de conversion de longueurs d'onde ; et
un second mécanisme d'entraînement pour entraîner la seconde roue en rotation, dans lequel un point lumineux sur la seconde roue formé par la lumière d'excitation éclaire le matériau de conversion de longueurs d'onde le long d'un trajet prédéterminé et le matériau de conversion de longueurs d'onde convertit la lumière d'excitation en lumière convertie.

3. Appareil de projection selon la revendication 1,
dans lequel le générateur de signal synchrone détecte une position de mouvement de la première roue de couleur afin de générer le signal synchrone.

4. Appareil de projection selon la revendication 1,
dans lequel le dispositif de commande fournit une première énergie à la première source de lumière à semi-conducteurs lorsque le premier segment est dans le trajet de la lumière convertie, fournit une deuxième énergie à la première source de lumière à semi-conducteurs lorsque le deuxième segment est dans le trajet de la lumière convertie et fournit une faible énergie à la première source de lumière à semi-conducteurs lorsque le troisième segment se trouve dans le trajet de la lumière convertie, la faible énergie étant inférieure à la première et à la seconde énergie.

5. Appareil de projection selon la revendication 4,
dans lequel la faible énergie coupe la première source de lumière à semi-conducteurs ou ajuste l'énergie de la première source de lumière à semi-conducteurs pour la maintenir en état de réserve lorsque le troisième segment est dans le trajet de la lumière convertie.

6. Appareil de projection selon la revendication 1,
dans lequel le dispositif de commande fournit une troisième énergie à la seconde source de lumière à semi-conducteurs lorsque le troisième segment est dans le trajet de la lumière convertie et fournit une faible énergie à la seconde source de lumière à semi-conducteurs lorsque le premier et le second segment sont dans le trajet de la lumière convertie, la faible énergie étant inférieure à la troisième énergie.

7. Appareil de projection selon la revendication 6,
dans lequel le dispositif de commande coupe la seconde source de lumière à semi-conducteurs ou ajuste l'énergie de la deuxième source de lumière à semi-conducteurs pour la maintenir en état de réserve lorsque le premier ou le deuxième segment se trouve dans le trajet de la lumière convertie.

8. Appareil de projection selon la revendication 1,
dans lequel la première roue de couleur comprend en outre un quatrième segment qui transmet la lumière convertie et la troisième lumière primaire,
dans lequel le premier, le deuxième, le troisième et le quatrième segment sont en alternance dans le trajet de la lumière convertie et la troisième lumière de couleur primaire par entraînement d'un premier mécanisme d'entraînement et
dans lequel, lorsque le quatrième segment se trouve dans le trajet de la lumière convertie et de la troisième lumière de couleur primaire, le dispositif de commande commande la première et la seconde source de lumière à semi-conducteurs pour qu'elles se trouvent en état de travail simultanément.

9. Procédé de commande d'un appareil de projection, comprenant les étapes consistant à :
(a) générer directement ou indirectement au moins deux lumières de couleur primaire de différentes couleurs et délivrer lesdites lumières en alternance en utilisant au moins deux sources de lumière à semi-conducteurs ; dans lequel l'étape (a) comprend :
l'utilisation d'une première source de lumière à semi-conducteurs des au moins deux sources de lumière à semi-conducteurs pour générer une lumière d'excitation ;
l'utilisation d'un dispositif de conversion de longueurs d'onde pour convertir la lumière d'excitation en lumière convertie ;
l'utilisation d'un premier mécanisme d'entraînement pour entraîner une première roue de couleur en rotation, la première roue de couleur ayant un premier et un deuxième segment de sorte que le premier et le deuxième segment soient disposés en alternance dans un trajet de la lumière convertie lorsque la première roue de couleur tourne, puis la lumière convertie est filtrée par le premier segment pour générer une première lumière de couleur primaire et est filtrée par le deuxième segment pour générer une seconde lumière de couleur primaire ;
dans lequel l'étape (a) comprend en outre :
l'utilisation d'une seconde source de lumière à semi-conducteurs des au moins deux sources de lumière à semi-conducteurs pour générer une troisième lumière de couleur primaire qui est combinée à la lumière convertie pour former une lumière combinée,
l'utilisation d'un dispositif de combinaison de lumière pour combiner la lumière convertie et la troisième lumière de couleur primaire afin d'éclairer la première roue de couleur,
l'utilisation du premier mécanisme d'entraînement pour entraîner la première roue de couleur qui a en outre un troisième segment de sorte que le premier, le deuxième et le troisième segment soient disposés en alternance dans un trajet de la lumière convertie et de la troisième lumière de couleur primaire, et que la troisième lumière de couleur primaire passe à travers le troisième segment ;
(b) générer un signal synchrone en utilisant un détecteur de signal synchrone ; et
(c) utiliser un dispositif de commande pour commander l'énergie d'entraînement en mode pulsé des au moins deux sources de lumière à semi-conducteurs sur la base du signal synchrone de sorte que, au cours d'au moins une certaine sous-période, au moins une source de lumière à semi-conducteurs soit en état de travail et qu'au moins une autre source de lumière à semi-conducteurs soit en état de réserve.

10. Procédé selon la revendication 9, dans lequel l'étape (c) comprend :
l'utilisation du dispositif de commande pour fournir une première énergie à la première source de lumière à semi-conducteurs lorsque le premier segment se trouve dans le trajet de la lumière convertie, fournir une seconde énergie à la première source de lumière à semi-conducteurs lorsque le deuxième segment se trouve dans le trajet de la lumière convertie, fournir une faible énergie à la première source de lumière à semi-conducteurs lorsque le troisième segment se trouve dans le trajet de la lumière convertie, la faible énergie étant inférieure à la première et à la deuxième énergie, fournir une troisième énergie à la seconde source de lumière à semi-conducteurs lorsque le troisième segment se trouve dans le trajet de la lumière convertie et fournir une autre faible énergie à la seconde source de lumière à semi-conducteurs lorsque le premier et le deuxième segment se trouvent dans le trajet de la lumière convertie, ladite une autre faible énergie étant inférieure à la troisième énergie.
